**Europäisches Patentamt**

**European Patent Office**

**Office européen des brevets**

(19)

(11) Numéro de publication: **0 233 430 B1**

(12) **FASCICULE DE BREVET EUROPEEN**

(45) Date de publication du fascicule du brevet:
25.04.90

(51) Int. Cl.⁴: **D04H 3/07, B29C 67/14**

(21) Numéro de dépôt: 86402931.9

(22) Date de dépôt: **24.12.86**

(54) **Procédé de préparation des matériaux composites fibre-matrice à fibres strictement positionnées et orientées.**

(30) Priorité: **30.12.85 FR 8519436**

(43) Date de publication de la demande:
**26.08.87 Bulletin 87/35**

(45) Mention de la délivrance du brevet:
**25.04.90 Bulletin 90/17**

(84) Etats contractants désignés:
**AT BE CH DE ES FR GB GR IT LI LU NL SE**

(56) Documents cités:
**EP-A- 0 070 759**
**FR-A- 1 215 844**
**FR-A- 1 475 068**
**FR-A- 1 491 708**
**FR-A- 2 122 549**
**US-A- 3 322 868**

(73) Titulaire: **Pradom Limited, 70 Finsbury Pavement,
London EC2A 1SX(GB)**

(72) Inventeur: **Berger, Michel, 104 La Lande Sainte-Hélène,
F-33480 Casteinau-de-Médoc(FR)**

(74) Mandataire: **Combe, André et al, CABINET BEAU DE
LOMENIE 55, rue d'Amsterdam, F-75008 Paris(FR)**

## Description

La présente invention concerne un procédé pour la préparation des matériaux composites fibre-matrice à fibres strictement positionnées et orientées.

Il est connu que les matériaux composites sont le plus souvent constitués de fibres de renforcement dispersées dans une matrice convenable ; les fibres de renforcement utilisées sont des fibres organiques ou inorganiques telles que les fibres de Nylon (aromatique ou non) les fibres de carbone, les fibres de verre, les fibres de carbure de silicium, les fibres de bore...; les matrices utilisées sont elles-mêmes de nature organique ou inorganique, comme par exemple des matrices de résines, de métaux, d'alliages métalliques ou de céramiques; de plus lesdites matrices peuvent comporter des charges diverses telles que par exemple : la poudre de graphite, la poudre de titane, la poudre de céramiques... Les matériaux selon la présente invention comportent des fibres et des matrices telles que décrites ci-dessus.

Selon l'orientation des fibres les matériaux composites peuvent être mono-, bi- ou tridimensionnels dans leurs propriétés selon l'orientation ou les orientations des fibres.

On sait réaliser des monodirectionnels, fibres parallèles tenues par de légers fils de Nylon, de verre, etc. ou des matériaux composites bidirectionnels constitués de plusieurs couches monodirectionnelles empilées et formant entre elles des angles divers, ou tout simplement tissées. Mais, en ce qui concerne la réalisation d'une structure fibreuse tridimensionnelle, le problème est beaucoup plus compliqué. Dans tous les procédés connus, on fait appel soit à un tricotage spécial, soit à des fibres qui traversent des ensembles bidimensionnels, chaque fibre étant guidée par une aiguille (voir par exemple US-A 3 322 868). On utilise aussi des genres de feutres dits tridimensionnels et qui ne sont ni plus ni moins que des bouclages genre tricot courant.

Mais il est connu également que les propriétés des matériaux obtenus peuvent dépendre de la régularité de la dispersion et de l'orientation des fibres et qu'il y a intérêt à disposer d'un procédé permettant de contrôler strictement cette dispersion et cette orientation dans les diverses directions choisies. C'est là un but de la présente invention.

L'invention concerne donc un procédé pour la préparation du matériau selon l'invention; ce procédé est caractérisé en ce que :

a) dans une première étape on réalise une brosse bombée de fibres de renforcement régulièrement réparties, piquées sur un support, de forme convenable ; pour former ladite brosse bombée, ledit support peut avoir la forme d'une portion de cylindre ou d'une calotte sphérique,
- lesdites fibres de renforcement qui constituent les poils de ladite "brosse bombée" sont soumises à un champ électrostatique continu intense, de façon que lesdites fibres soient immobilisées (les unes par rapport aux autres) sous une forme tendue perpendiculaire à la surface du support,

b) dans une deuxième étape, on insère entre lesdites fibres des nappes (ou grilles) successives de fibres disposées successivement à 90° les unes par rapport aux autres, ladite insertion étant réalisée alors que les fibres de renforcement piquées sur ledit support sont soumises audit champ électrostatique continu intense,

c) dans une troisième étape les éléments utilisés pour le fixage des fibres de ladite brosse sont enlevés,

d) dans une quatrième étape la structure fibreuse est imprégnée d'une prématrice liquide et éventuellement soumise à une compression en vue de la densification du prématériau obtenu,

e) enfin dans une cinquième étape le prématériau est soumis à des conditions permettant la formation de la matrice.

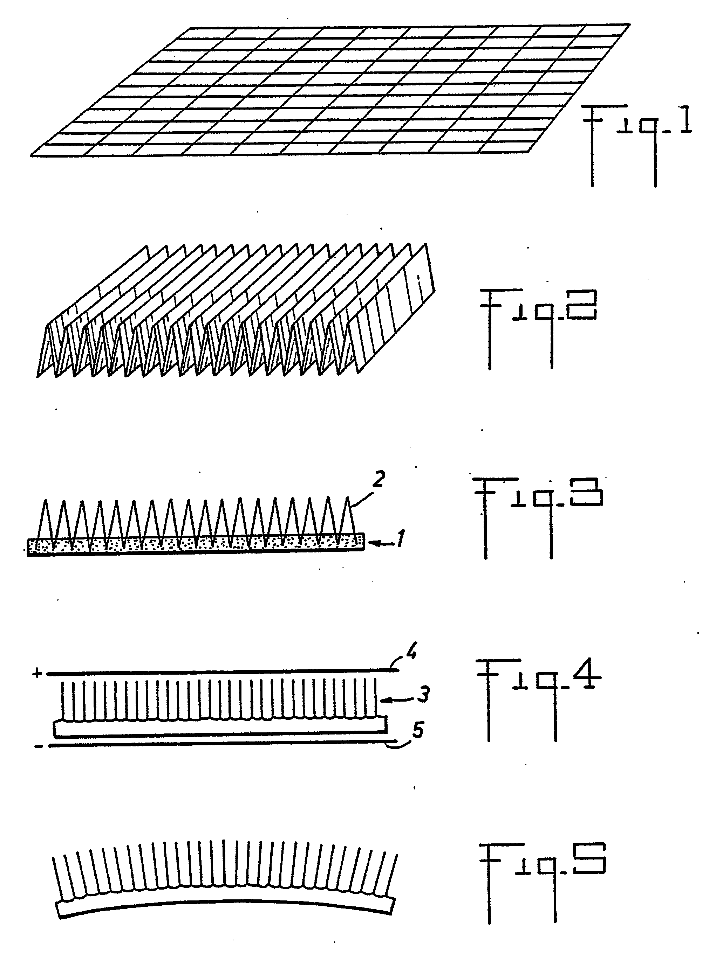

Le procédé mis en oeuvre sera mieux compris en se référant aux figures 1 à 12 qui en illustrent schématiquement les diverses étapes ; la description plus précise de chacune de ces étapes, description donnée ci-après à titre d'exemple non limitatif, permettra d'une part, de préciser les indications générales fournies dans la définition précédente dudit procédé et, d'autre part, de montrer les variantes possibles dudit procédé.

La première étape consiste donc à réaliser une brosse bombée de fibres également réparties lesdites fibres étant tendues, régulièrement espacées et fixées; un mode préférentiel du mode de réalisation de cette première étape est illustré par les figures 1 à 5.

On utilise comme produit de départ un ensemble monodirectionnel de fibres (verre, polyamide, carbone, alumine, bore...) se présentant sous forme d'une plaque comme représenté sur la figure 1.

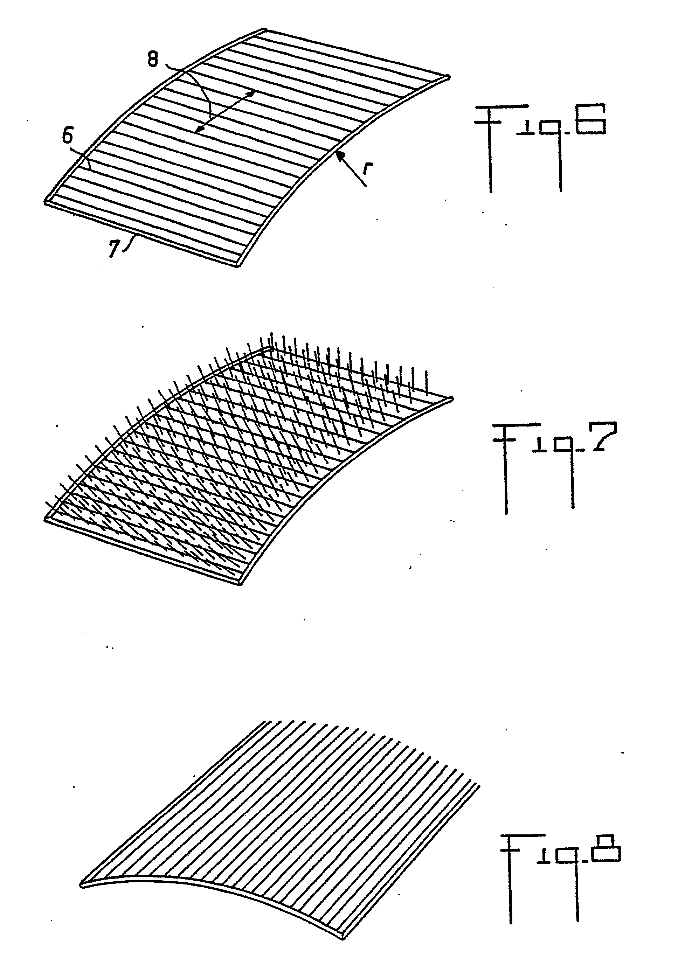

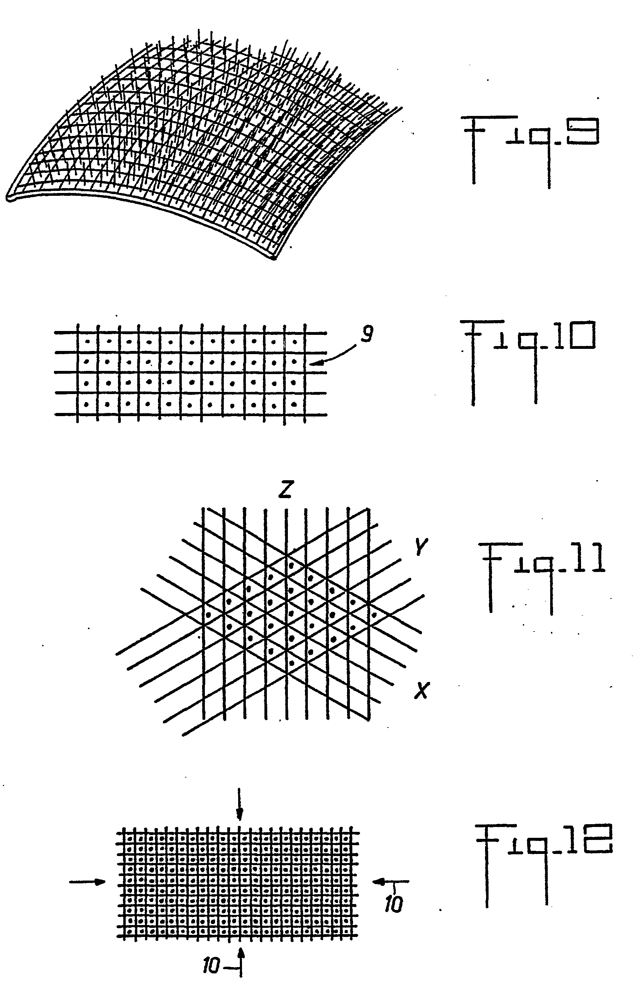

On réalise le pliage (par exemple automatique) de cette structure fibreuse monodirectionnelle comme cela est représenté sur la figure 2; on notera que le nombre et la disposition (plus ou moins resserrée) des fibres qui formeront la "brosse" vont dépendre de ce pliage; ce nombre sera d'autant plus élevé que le pliage sera plus serré; ce pliage est ensuite fixé par dépôt le long d'un bord du matériau plié d'une semelle souple, par exemple en acétate de cellulose, comme cela est représenté sur la figure 3 (sur cette figure ladite semelle est référencée 1 et la structure pliée 2) .

Après cette opération, Fig. 4, les sommets de ces pliages sont coupés et on obtient un genre de brosse, comme on le voit en 3 Fig. 4. Cette brosse est placée dans un champ électrostatique haute tension comprise entre 50 000 et 200 000 volts continus entre les électrodes 4 et 5. Le champ électrostatique tend les fibres et les maintient à une distance égale les unes par rapport aux autres. Puis on pulvérise sur cette brosse, pendant qu'elle est soumise au champ électrostatique qui tient rigides les fibres verticales, avantageusement le même produit que celui qui a servi de base en 1 Fig. 3. Ce système d'enduction sera fait à base d'un produit pouvant être solubilisé et détruit par la suite.

Cette brosse, constituée à cet instant de fibres maintenues à l'une de leurs extrémités (1), parallèles entre elles et en position perpendiculaire au support (ou semelle 1) grâce à l'emploi du champ électrostatique, est alors bombée. Il s'agit d'une opération très importante dans le cadre de la présente invention puisque, grâce à cette opération, on va pouvoir obtenir une brosse bombée dont les poils sont d'une part suffisament denses (à leur base) mais d'autre part suffisamment écartés (à leur extrémité libre) pour permettre les opérations suivantes à effectuer dans la présente invention.

La brosse bombée est représentée schématiquement sur la figure 5.

La deuxième étape du procédé est illustrée sur les figures 6 à 9; dans cette étape on dispose successivement un certain nombre de grilles (présentant le même cintrage que celui de la brosse) entre les fibres de la brosse. Sur la figure 6 on a représenté des fibres (ou fibrilles) tendues sur un cadre 7 de façon à former une grille; ce cadre forme une courbe déterminée de rayon r , même rayon que la brosse. Les fibres placées sur ce cadre sont tendues mais mobiles de manière à pouvoir se rapprocher dans le sens des flèches 8.

Ce cadre est ensuite enfilé sur la brosse représentée Fig. 5, ce qui permet d'obtenir un ensemble bidimensionnel dans le sens de la chaîne et dans le sens vertical, comme représenté Fig. 7. La courbure ainsi décrite permet une meilleure introduction des fibres verticales dans les chaînes et dans les trames.

Il peut être souhaitable qu'après mise en place de la grille entre les fibres de la brosse l'ensemble soit soumis à un champ électrostatique analogue à celui décrit ci-dessus pour la fabrication de la brosse. L'utilisation de ce champ favorise le positionnement convenable des fibres les unes par rapport aux autres.

Cette opération est repétée de façon à faire un empilement convenable de grilles. Il est clair que cet empilement peut s'effectuer en disposant les fibres de chaque grille dans le même sens ou dans des sens différents, ce qui donnera naissance à des matériaux ayant des propriétés différentes ; il est clair également que les grilles peuvent être différentes les unes des autres, soit par le nombre de fibres (on peut par exemple pour certaines grilles supprimer une fibre sur deux),soit même, si nécessaire, par la nature des fibres ; enfin l'on peut réaliser un matériau non homogène en disposant par exemple, sur une certaine épaisseur des grilles dont les fibres sont orientées dans la même direction et sur une autre épaisseur des grilles dont les fibres sont orientées alternativement dans deux directions perpendiculaires.

Dans ce qui suit on illustrera l'invention dans le cas particulier de la préparation d'un matériau à orientation tridimensionnelle, c'est-à-dire un matériau constitué de fibres monodirectionnelles dans un plan X ou chaîne, puis d'un autre réseau de fibres dans le plan Y ou trame, et d'autres fibres (dénommées brosse) qui font un angle de 90° par rapport à la trame et à la chaîne dans le plan Z.

Pour réaliser des matériaux à orientation tridimensionnelle, on réalisera la même opération d'insertion d'une grille entre les fibres de la brosse mais en orientant les fibres de la grille dans un sens perpendiculaire à l'orientation des fibres de la grille inférieure. C'est ce qui a été représenté sur les figures 8 et 9 où la grille de la figure 8, convenablement cintrée et dont les fibres sont orientées perpendiculairement par rapport aux fibres de la grille de la figure 6 est disposée (figure 9) sur le matériau de la figure 7. Cette opération (empilement de grilles convenablement orientées), répétée autant de fois que cela sera nécessaire en fonction de la hauteur du produit que l'on désire et du diamètre des fibres, permet d'obtenir un réseau tridimensionnel comme celui représenté Fig. 10 en vue de haut. On a donc, à ce moment là, un tridimensionnel qui se présente comme un ensemble selon X, Y, Z, sous forme d'une calotte sphérique de grand rayon.

Dans une troisième étape, on enlève les produits qui ont servi, d'une part, à réaliser la semelle de la brosse, et,d'autre part, à fixer les fibres de la brosse. Cet enlèvement peut être très avantageusement réalisé (si les matériaux en cause le permettent) par une simple dissolution dans un solvant ; le solvant choisi sert également à décaper la surface des fibres de façon à favoriser les interactions ultérieures entre fibres et matrice.

Le réseau de fibres est séché et l'on introduit alors dans ledit réseau le liquide formateur de la matrice. Comme connu, ce liquide peut être suivant les cas, soit du matériau de matrice fondu, soit un matériau (prépolymère par exemple) qui par transformation ultérieure donnera naissance à la matrice. Une telle opération d'imprégnation est bien connu des spécialistes.

Lorsque l'imprégnation a été réalisée, les cadres qui tenaient les fibres des diverses grilles sont détachés et la structure obtenue est mise à plat ou mise en forme si nécessaire; l'excès de matrice (ou de précurseur de matrice) peut alors être éliminé.

Après une telle opération, on obtient réellement Fig. 11 un réseau tridimensionnel X, Y, Z.

Si l'on désire avoir un produit très compact dans lequel il y ait le minimum de matrice, juste de quoi enrober les fibres, on peut exercer des pressions latéralement et verticalement Fig. 12 selon les flèches 10. A ce moment, après polymérisation de la matrice, on obtient un ensemble fibres-matrice tridimensionnel à structure très serrée qui présente des caractéristiques à la flexion, à la rupture, à la compression et à l'élongation absolument remarquables.

On notera par ailleurs qu'il est connu que, lorsque des fibres, telles que celles utilisées dans la présente demande pour réaliser le renforcement, sont soumises à un champ électrostatique produit par un courant alternatif (d'environ 25 000 volts), il se produit un mordançage de la surface desdites fibres, ce qui a pour conséquence d'entraîner une meilleure adhérence de la matrice sur lesdites fibres. Il est donc possible à un stade ou l'autre du procédé selon l'invention de faire subir aux fibres un tel traitement par le champ produit par un courant alternatif.

Dans le cas où l'on voudrait obtenir, par exemple, une structure de haute résistance à de très hautes températures, on peut introduire une matrice en carbone sous forme de brai à l'état pur et l'ensemble comprimé et polymérisé sous vide en autoclave permet d'obtenir ces fameuses structures type carbone-carbone couramment empoloyées dans la technique de l'aérospatiale et en prothèse médicale.

On a réalisé selon le procédé de l'invention une plaque de dimensions 150 x 100 x 16 mm en utilisant :
- comme fibres des fibres de carbone Brochier-Toray.
- comme résine une résine tricomposant Ciba-Geigy.
ref : base LY 556, durcisseur NY 917 et accélérateur DY070.
la polymérisation de ladite résine a été réalisée avec une montée lente en température (polymérisation effective 8 heures à 140°C).
- champ électrostatique pour le positionnement des fibres :
100 000 $^V$DC pendant 7 minutes
15 000 $^V$AC pendant 3 minutes
- on a superposé environ 30 couches de grilles disposées en deux directions perpendiculaires
- la pression appliquée avant polymérisation : 6 tonnes par dm$^2$
- la répartition fibres-matrice : 73% fibres, résine 27%.

La plaque ainsi obtenue a pu subir des contraintes de rupture à la flexion de 1600 Gp dans les trois axes sans aucune déformation.

Le matériau final obtenu peut être en forme ou peut ultérieurement être usiné pour l'obtention de pièces particulières de haute résistance.

Les avantages du procédé selon l'invention sont les suivants :

1°) - Coût de fabrication assez faible par rapport à tous les systèmes existants.
2°) - Possibilité d'une fabrication en continu.
3°) - Fabrication de réseaux complexes pour répondre à des charges de rupture inégales sur l'ensemble de la structure.

## Revendication

Procédé pour la préparation d'un matériau composite formé de fibres de renforcement régulièrement disposées et orientées dans plus de deux directions et d'une matrice emplissant l'espace entre lesdites fibres, caractérisé en ce que :

a) dans une première étape, on réalise une brosse bombée desdites fibres de renforcement régulièrement réparties et fixées par une de leurs extrémités sur un support bombé, lesdites fibres étant soumises à un champ électrostatique continu intense orienté parallèlement auxdites fibres de façon que les fibres soient immobilisées à l'état tendu perpendiculairement à la surface du support,
b) dans une deuxième étape, on insère entre lesdites fibres des nappes (ou grilles) successives de fibres, disposées successivement à 90° les unes par rapport aux autres, ladite insertion étant réalisée alors que les fibres de renforcement piquées sur ledit support sont soumises audit champ électrostatique continu intense,
c) dans une troisième étape, les éléments utilisés pour le fixage des fibres de ladite brosse sont enlevés,
d) dans une quatrième étape, la structure fibreuse est imprégnée d'une prématrice liquide et éventuellement soumise à une compression en vue de la densification du prématériau obtenu,
e) enfin, dans une cinquième étape, le prématériau est soumis à des conditions permettant la formation de la matrice.

## Patentanspruch

Verfahren zur Herstellung eines Verbundwerkstoffs, gebildet aus Verstärkungsfasern, die regelmäßig angeordnet und in mehr als zwei Richtungen orientiert sind, und aus einer Matrix, die den Raum zwischen den Fasern ausfüllt, dadurch gekennzeichnet, daß

a) man in einer ersten Stufe eine gewölbte Bürste aus diesen Verstärkungsfasern, die gleichmäßig verteilt und mit einem ihrer Enden auf einem gewölbten Träger montiert sind, herstellt, wobei die Fasern einem starken kontinuierlichen elektrostatischen Feld unterworfen werden, welches parallel zu den Fasern gerichtet ist, so daß die Fasern im senkrecht zur Oberfläche des Trägers gespannten Zustand immobilisiert werden,
b) man in einer zweiten Stufe zwischen den Fasern aufeinanderfolgende Gelege (oder Raster) von Fasern, einlegt, die eines nach dem anderen in einem Winkel von 90° zueinander angeordnet sind, wobei das Einlegen dann erfolgt, wenn die auf dem Träger aufgesteckten Verstärkungsfasern dem starken kontinuierlichen elektrostatischen Feld unterworfen werden,
c) in einer dritten Stufe die zum Fixieren der Fasern der Bürste verwendeten Elemente entfernt werden,
d) in einer vierten Stufe die Faserstruktur mit einer flüssigen Vormatrix imprägniert und gegebenenfalls einer Komprimierung zwecks Verdichtung des erhaltenen Vormaterials unterworfen wird,
e) schließlich in einer fünften Stufe das Vormaterial Bedingungen ausgesetzt wird, die die Bildung der Matrix gestatten.

## Claim

Process for the preparation of a composite material formed of reinforcing fibers, regularly distributed and oriented in more than two directions, and of a matrix filling up the space between said fibers, characterized in that said process comprises the steps of:

a) in a first step, producing a convex brush of said reinforcing fibers, regularly distributed and fixed by one of their ends on a convex base, said fibers being subjected to an intensive DC electrostatic field, oriented in parallel to said fibers so that the fibers are immobilized in stretched condition perpendicularly to the surface of the base;
b) in a second step, inserting between said reinforcing fibers successive layers of fibers, disposed successively at 90° from one another, said inserting being carried out while the reinforcing fibers fixed on said base are subjected to the intensive D.C. electrostatic field;

c) in a third step, removing the fixing elements used for fixing the fibers of said brush;

d) in a fourth step, impregnating the fibrous structure with a liquid pre-matrix and optionally subjecting it to a compression with a view to densifying the obtained pre-material, and

e) finally, in a fifth step, subjecting the pre-material to conditions permitting the formation of the matrix.

Fig.1

Fig.2

Fig.3

2

1

Fig.4

4

+

3

5

-

Fig.5

Fig.6

Fig.7

Fig.8

Fig.9

Fig.10

Fig.11

Fig.12